# EUROPEAN PATENT SPECIFICATION

(11) **EP 4 451 777 B1**
(45) Date of publication and mention of the grant of the patent: **15.04.2026**
(21) Application number: 23743324.8
(22) Date of filing: 19.01.2023
(51) Int. Cl.: H04W 80/02, H04W 88/04, H04W 92/18, H04W 40/22, H04W 76/10, H04W 88/06, H04W 76/14, H04W 76/15, H04W 76/20, H04W 84/04, H04W 24/10

(54) **COMMUNICATION CONTROL METHOD**
KOMMUNIKATIONSSTEUERUNGSVERFAHREN
PROCÉDÉ DE COMMANDE DE COMMUNICATION

(30) Priority: 21.01.2022 US 202263301773 P
(43) Date of publication of application: 23.10.2024
(73) Proprietor: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2023/001567
(87) International publication number: WO 2023/140332

(56) References cited:
- US-A1- 2018 213 577
- US-A1- 2021 377 842
- HUAWEI ET AL: "Views on Rel-18 sidelink relay enhancements", vol. TSG RAN, no. Electronic Meeting; 20210913 - 20210917, 6 September 2021 (2021-09-06), XP052049565, Retrieved from the Internet <URL:https://ftp.3gpp.org/tsg_ran/TSG_RAN/TSGR_93e/Docs/RP-212291.zip RP-212291 Views on Rel-18 sidelink relay enhancements.doc> [retrieved on 20210906]
- HUAWEI, HISILICON: "Views on Rel-18 sidelink relay enhancements", 3GPP DRAFT; RP-212291, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Electronic Meeting; 20210913 - 20210917, 6 September 2021 (2021-09-06), Mobile Competence Centre ; 650, route des Lucioles ; F-06921 Sophia-Antipolis Cedex ; France, XP052049565
- MEDIATEK INC.: "Introduction of Rel-17 Sidelink Relay", 3GPP DRAFT; R2-2111437, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20211101 - 20211112, 22 November 2021 (2021-11-22), Mobile Competence Centre ; 650, route des Lucioles ; F-06921 Sophia-Antipolis Cedex ; France, XP052082145
- NOKIA, NOKIA SHANGHAI BELL, ERICSSON: "Stage 2 corrections for SL Relay", 3GPP DRAFT; R2-2200944, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20220117 - 20220125, 11 January 2022 (2022-01-11), Mobile Competence Centre ; 650, route des Lucioles ; F-06921 Sophia-Antipolis Cedex ; France, XP052094062
- SPREADTRUM COMMUNICATIONS: "Sidelink relay enhancement for R18", 3GPP DRAFT; RWS-210059, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Electronic Meeting; 20210628 - 20210702, 7 June 2021 (2021-06-07), Mobile Competence Centre ; 650, route des Lucioles ; F-06921 Sophia-Antipolis Cedex ; France , XP052025622

## Description

### TECHNICAL FIELD

The present disclosure relates to a communication control method used in a mobile communication system.

### BACKGROUND

For a mobile communication system based on the 3rd Generation Partnership Project (3GPP) standard, a technology of sidelink relay using a user equipment as a relay node has been under study (e.g., see "3GPP TS 38.300 V16.8.0 (2021-12)"). The sidelink relay is a technology in which a relay node referred to as a relay user equipment (Relay UE) mediates communication between a base station and a remote user equipment (Remote UE) and relays the communication.
US 2018/213577 A1 and US 2021/377842 A1 also describe relaying systems in the field of wireless communication.

### SUMMARY

The present invention provides a communication control method according to claim 1, a chipset according to claim 3, a mobile communication system according to claim 5, a computer program according to claim 7, and a remote user equipment according to claim 9. Preferred embodiments are described in the dependent claims.

### BRIEF DESCRIPTION OF THE DRAWINGS

FIG. 1 is a diagram illustrating a configuration example of a mobile communication system according to a first embodiment.
FIG. 2 is a diagram illustrating a configuration example of a UE according to the first embodiment.
FIG. 3 is a diagram illustrating a configuration example of a gNB according to the first embodiment.
FIG. 4 is a diagram illustrating a configuration example of a protocol stack of a user plane according to the first embodiment.
FIG. 5 is a diagram illustrating a configuration example of a protocol stack of a control plane according to the first embodiment.
FIG. 6 is a diagram illustrating an assumed scenario according to the first embodiment.
FIG. 7 is a diagram illustrating a configuration example of a protocol stack of a user plane in the assumed scenario according to the first embodiment.
FIG. 8 is a diagram illustrating a configuration example of a protocol stack of a control plane in the assumed scenario according to the first embodiment.
FIG. 9 is a diagram illustrating a configuration example of a mobile communication system according to the first embodiment.
FIG. 10 is a diagram illustrating a configuration example of a protocol stack according to the first embodiment.
FIG. 11 is a diagram illustrating an operation example according to the first embodiment.
FIG. 12 is a diagram illustrating an operation example according to the first embodiment.
FIG. 13 is a diagram illustrating a configuration example of a protocol stack according to a variation of the first embodiment.
FIG. 14 is a diagram illustrating an operation example according to a second embodiment.
FIG. 15 is a diagram illustrating a configuration example of a mobile communication system according to a third embodiment.
FIG. 16 is a diagram illustrating a configuration example of a mobile communication system according to a fourth embodiment.
FIG. 17 is a diagram illustrating an operation example according to the fourth embodiment.
FIG. 18 is a diagram illustrating an operation example according to a fifth embodiment.

### DESCRIPTION OF EMBODIMENTS

A mobile communication system according to an embodiment is described with reference to the drawings. In the description of the drawings, the same or similar parts are denoted by the same or similar reference signs.

### Configuration Example of Mobile Communication System

In an embodiment, a configuration example of a mobile communication system is described. In the embodiment, a mobile communication system 1 is a 3GPP 5G system. Specifically, a radio access scheme in the mobile communication system 1 is New Radio (NR) being a radio access scheme of the 5G. Note that Long Term Evolution (LTE) may be at least partially applied to the mobile communication system 1. Future mobile communication systems such as the 6G may be applied to the mobile communication system 1.

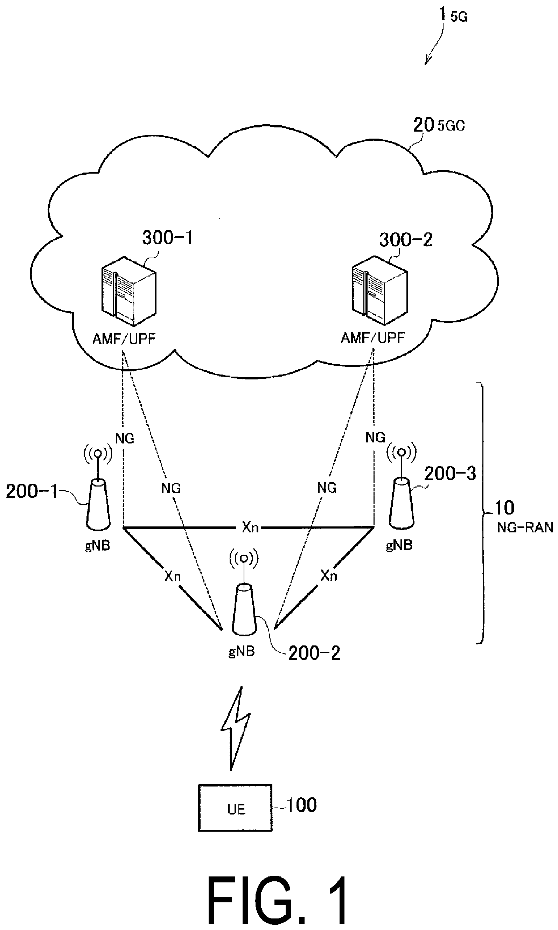

FIG. 1 is a diagram illustrating a configuration example of the mobile communication system 1 according to an embodiment.

As illustrated in FIG. 1, the mobile communication system 1 includes a User Equipment (UE) 100, a 5G radio access network (Next Generation Radio Access Network (NG-RAN)) 10, and a 5G Core Network (5GC) 20.

The UE 100 is a mobile wireless communication apparatus. The UE 100 may be any apparatus as long as the UE 100 is used by a user. Examples of the UE 100 include a mobile phone terminal (including a smartphone) or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency. Note that, hereinafter, the "cell" and the base station may be used without distinction.

Note that the gNB 200 can be connected to an Evolved Packet Core (EPC) corresponding to a core network of LTE. An LTE base station can also be connected to the 5GC 20. The LTE base station and the gNB 200 can be connected to each other via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF 300 are connected to the gNB 200 via an NG interface which is an interface between the base station and the core network.

### Configuration of User Equipment

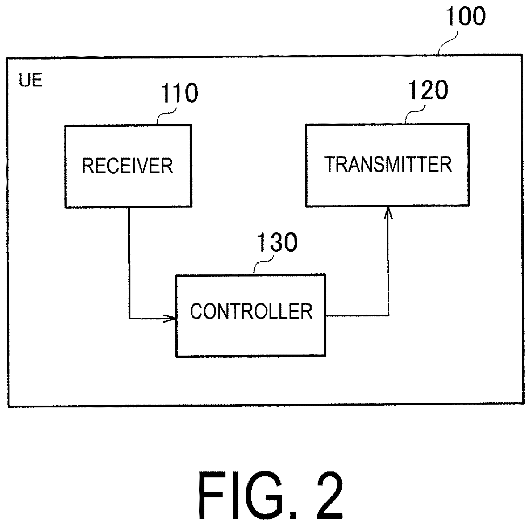

In the embodiment, a configuration example of the UE 100 that is a user equipment is described. FIG. 2 is a diagram illustrating the configuration example of the UE 100.

As illustrated in FIG. 2, the UE 100 includes a receiver 110, a transmitter 120, and a controller 130.

The receiver 110 performs various types of reception under control of the controller 130. The receiver 110 includes an antenna and converts (down-converts) a radio signal received by the antenna into a baseband signal (reception signal) which is then output to the controller 130.

The transmitter 120 performs various types of transmission under control of the controller 130. The transmitter 120 includes an antenna and converts (up-converts) the baseband signal (transmission signal) output by the controller 130 into a radio signal which is then transmitted from the antenna.

The controller 130 performs various types of control in the UE 100. The controller 130 includes at least one memory and at least one processor electrically connected to the memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. Note that the controller 130 may perform respective processing operations and/or respective operations in the UE 100 in each embodiment described below.

### Configuration Example of Base Station

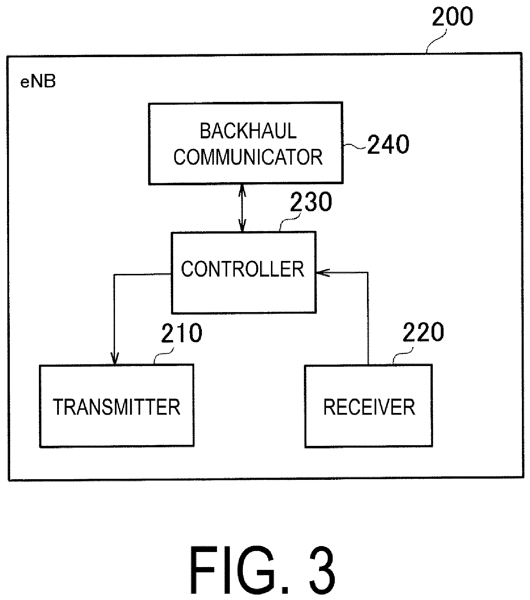

In the embodiment, a configuration example of the gNB 200 that is a base station is described. FIG. 3 is a diagram illustrating a configuration example of the gNB 200.

As illustrated in FIG. 3, the gNB 200 includes a transmitter 210, a receiver 220, a controller 230, and a backhaul communicator 240.

The transmitter 210 performs various types of transmission under control of the controller 230. The transmitter 210 includes an antenna and converts (up-converts) a baseband signal (transmission signal) output by the controller 230 into a radio signal which is then transmitted from the antenna.

The receiver 220 performs various types of reception under control of the controller 230. The receiver 220 includes an antenna and converts (down-converts) a radio signal received by the antenna into a baseband signal (reception signal) which is then output to the controller 230.

The controller 230 performs various types of controls for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. Note that, the controller 230 may perform respective processing operations and/or respective operations in the gNB 200 in each embodiment described below.

The backhaul communicator 240 is connected to a neighboring base station via the Xn interface. The backhaul communicator 240 is connected to the AMF and UPF 300 via the NG interface. Note that the gNB 200 may include a Central Unit (CU) and a Distributed Unit (DU) (i.e., functions are divided), and both units may be connected via an F1 interface.

### Configuration Example of Protocol Stack

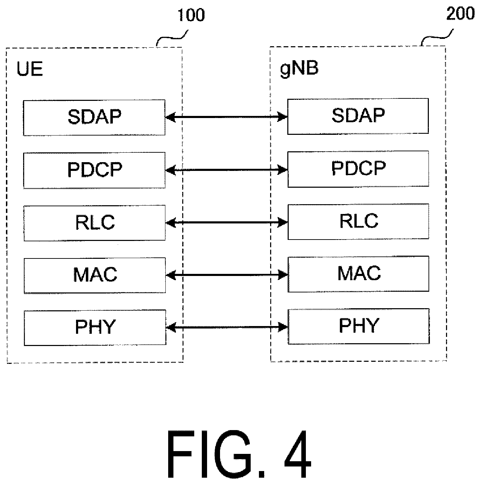

FIG. 4 is a diagram illustrating a configuration example of a protocol stack of a radio interface of a user plane handling data.

As illustrated in FIG. 4, a radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer. Note that, in the following, a layer and an entity may be used without distinction.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression and decompression, and encryption and decryption.

The SDAP layer performs mapping between an IP flow as the unit of Quality of Service (QoS) control performed by a core network and a radio bearer as the unit of QoS control performed by an AS (access stratum). Note that, when the RAN is connected to the EPC, the SDAP need not be provided.

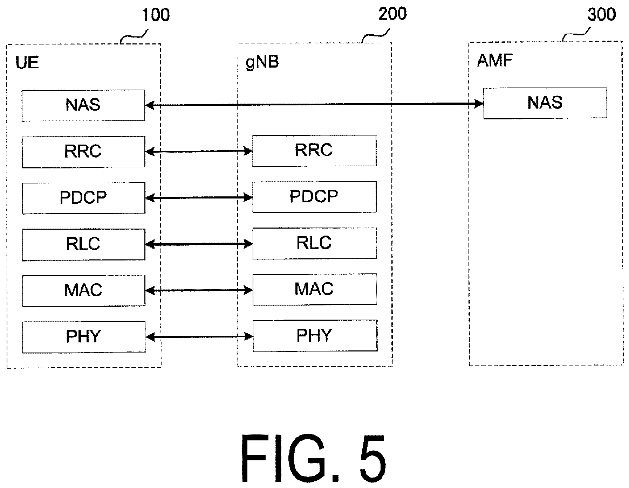

FIG. 5 is a diagram illustrating a configuration of a protocol stack of a radio interface of a control plane handling signaling (a control signal).

As illustrated in FIG. 5, the protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 exists, the UE 100 is in an RRC connected state. When no connection (RRC connection) between the RRC of the UE 100 and the RRC of the gNB 200 exists, the UE 100 is in an RRC idle state. When the RRC connection is suspended, the UE 100 is in an RRC inactive state.

The NAS layer which is positioned upper than the RRC layer performs session management, mobility management, and the like. NAS signaling is transmitted between the NAS layer of the UE 100 and the NAS layer of the AMF 300.

Note that the UE 100 includes an application layer other than the protocol of the radio interface.

### First Embodiment

A first embodiment is described.

### Assumed Scenario

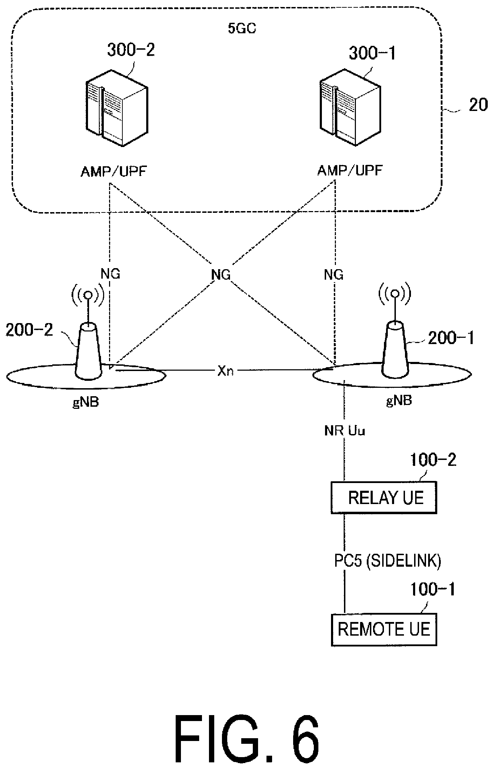

According to the first embodiment, an assumed scenario for the mobile communication system 1 is described. FIG. 6 is a diagram illustrating the assumed scenario.

As illustrated in FIG. 6, a scenario is assumed that uses sidelink relay in which a relay UE 100-2 mediates a communication between the gNB 200-1 and a remote UE 100-1 and relays the communication. In other words, in the scenario, the gNB 200-1 and the remote UE 100-1 communicate via the relay UE 100-2.

The remote UE 100-1 performs wireless communication (sidelink communication) with the relay UE 100-2 on a PC5 interface (sidelink) used as an inter-UE interface. The relay UE 100-2 performs wireless communication (Uu communication) with the gNB 200-1 on an NR Uu interface. As a result, the remote UE 100-1 indirectly communicates with the gNB 200-1 via the relay UE 100-2. The Uu communication includes uplink communication and downlink communication.

### Configuration Example of Protocol Stack in Assumed Scenario

A configuration example of a protocol stack in the assumed scenario is described.

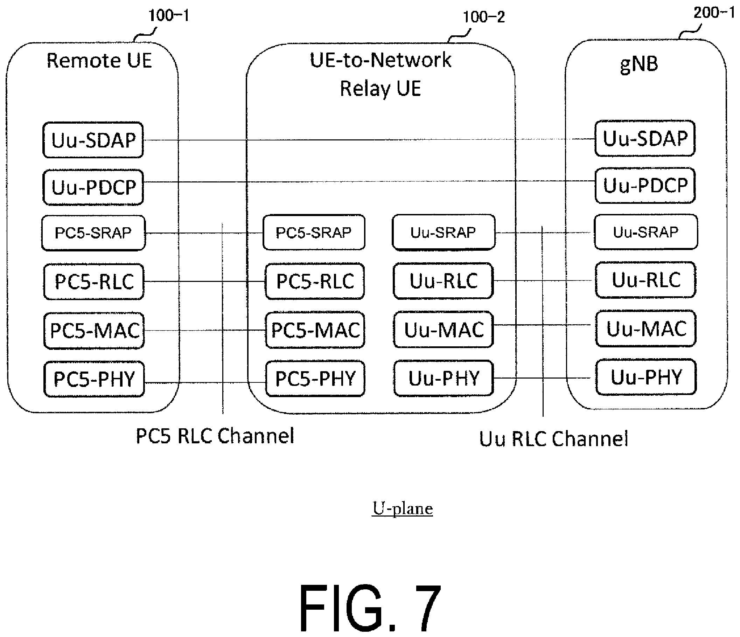

FIG. 7 is a diagram illustrating an example of a protocol stack of a user plane in the assumed scenario. FIG. 7 is also an example of a protocol stack of a user plane in relay via the relay UE 100-2 (i.e., U2N (UE to Network) relay).

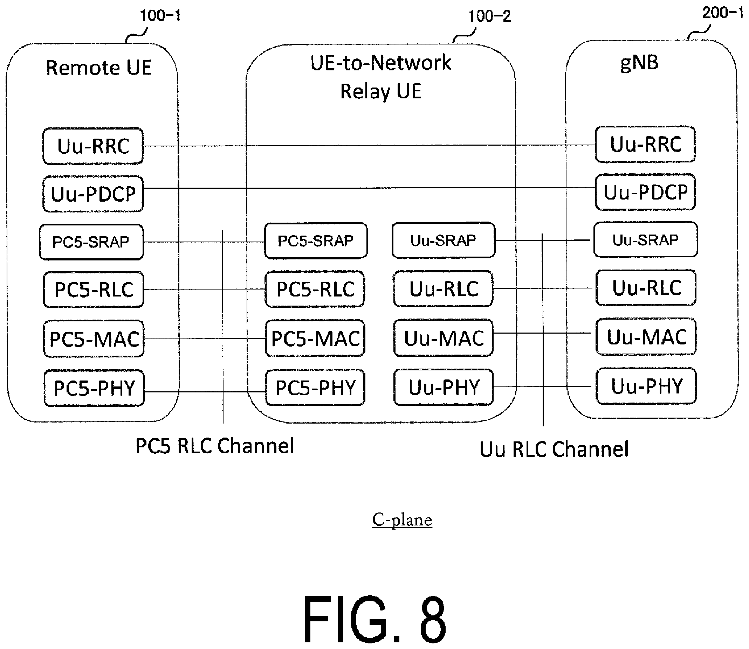

FIG. 8 is a diagram illustrating an example of a protocol stack of a control plane in the assumed scenario. FIG. 8 is also an example of a protocol stack of a control plane in the U2N relay.

As illustrated in FIG. 7, the gNB 200-1 includes a Uu-SRAP (sidelink relay adaptation protocol) layer, a Uu-RLC layer, a Uu-MAC layer, and a Uu-PHY layer which are used for communication on the NR Uu interface (Uu communication).

The relay UE 100-2 includes a Uu-SRAP layer, a Uu-RLC layer, a Uu-MAC layer, and a Uu-PHY layer which are used for communication on the NR Uu interface (Uu communication). The relay UE 100-2 includes a PC5-SRAP layer, a PC5-RLC layer, a PC5-MAC layer (PC5), and a PC5-PHY layer which are used for communication on the PC5 interface (PC5 communication).

The remote UE 100-1 includes a Uu-SDAP layer and a Uu-PDCP layer which are used for communication on a Uu interface (Uu). The remote UE 100-1 includes a PC5-SRAP layer, a PC5-RLC layer, a PC5-MAC layer (PC5), and a PC5-PHY layer which are used for communication on the PC5 interface (PC5 communication).

As illustrated in FIG. 8, in the control plane, a Uu-RRC layer is disposed instead of the Uu-SDAP layer of the user plane.

As illustrated in FIGs. 7 and 8, the SRAP layers are disposed on the Uu interface and the PC5 interface. Each SRAP layer is an example of a so-called adaptation layer. The SRAP layer is present only in a layer 2 relay and does not exist in a layer 3 relay. The SRAP layer is present in all of the remote UE 100-1, the relay UE 100-2, and the gNB 200-1. Further, the SRAP layer includes two layers of PC5-SRAP and Uu-SRAP. The PC5-SRAP and the Uu-SRAP each have a bearer mapping function. For example, the bearer mapping function is as follows. In other words, the remote UE 100-1 and the Uu-SRAP of gNB 200-1 perform mapping between the bearer (Uu-PDCP) and the PC5 RLC channel (PC5-RLC). The PC5-SRAP and the Uu-SRAP of the relay UE 100-2 perform mapping between the PC5 RLC channel (PC5-RLC) and the Uu RLC channel (Uu-RLC). Further, the Uu-SRAP has an identification function of the remote UE 100-1.

Note that, although not illustrated in FIGs. 7 and 8, each of the remote UE 100-1 and the relay UE 100-2 may include an RRC layer for PC5. Such an RRC layer is referred to as a "PC5-RRC layer". The PC5-RRC connection and the PC5 unicast link between the remote 100-1 and the UE 100-2 are in a one-to-one correspondence, and the PC5-RRC connection is established after the PC5 unicast link is established.

Although not illustrated in FIGs. 7 and 8, each of the remote UE 100-1 and the relay UE 100-2 may include a PC5-S (signaling) protocol layer. The PC5-S protocol layer is an upper layer of the PDCP layer. Like the PC5-RRC layer, the PC5-S protocol layer is also a layer for transmission of control information.

Communication Control Method according to First Embodiment In the 3GPP, a multi-path (or multi-link) UE to Network (U2N) sidelink relay may be discussed. The multi-path U2N sidelink relay refers to a relay (communication) in which one path is a direct link (in other words, Uu) and another path is an indirect link (in other words, a U2N sidelink relay). The direct link is a link between a network (e.g., gNB) and the remote UE 100-1 without involving the relay UE 100-2. The indirect link is a link between the network and the remote UE 100-1 via the relay UE 100-2.

Meanwhile, the 3GPP defines a split bearer. The split bearer includes a split bearer by Dual Connectivity (DC) and a split bearer by Multicast and Broadcast Service (MBS). When the split bearer by the DC is configured, the PDCP entity is associated with the RLC entity of the Master Cell Group (MCG) and the RLC entity of the Secondary Cell Group (SCG). When the split bearer by the MBS is configured, the PDCP entity is associated with the RLC entity for Point-to-Multipoint (PTM) and the RLC entity for PTP (point-to-point). In either of the split bearers, the PDCP entity is an anchor point associating two divided RLC entities with each other.

Considering the multi-path U2N sidelink relay and the split bearer, a "multi-link split bearer" is also conceivable. A "multi-link split bearer" is, for example, a split bearer including a direct link and an indirect link.

In the 3GPP, priorities are defined between a UL transmission (direct link) and a sidelink relay (indirect link). Therefore, for example, it is not assumed that the remote UE 100-1 performs a UL transmission and a sidelink relay at the same time.

However, the "multi-link split bearer" allows the remote UE 100-1 to transmit the same data using the two links or transmit different data using the two links. The "multi-link split bearer" also allows the remote UE 100-1 to use one link as for a control plane (CP) and use another link as for a user plane (UP). In this way, various operations can be supported by the "multi-link split bearer".

The "multi-link split bearer" is applicable to various forms of sidelink relay.

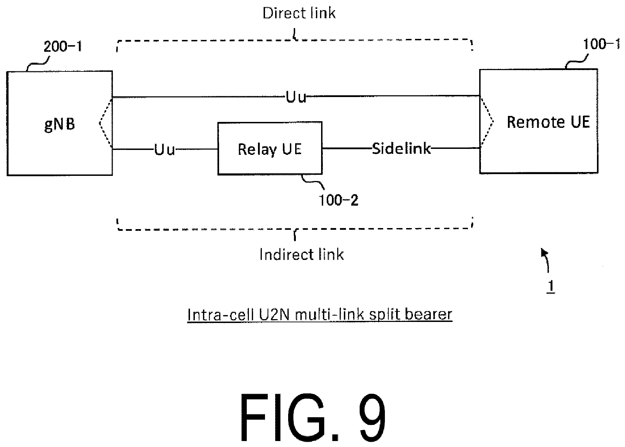

For example, FIG. 9 illustrates a configuration example of the mobile communication system 1 when the "multi-link split bearer" is applied to an intra-cell sidelink relay. Such a "multi-link split bearer" is referred to as an "intra-cell U2N multi-link split bearer".

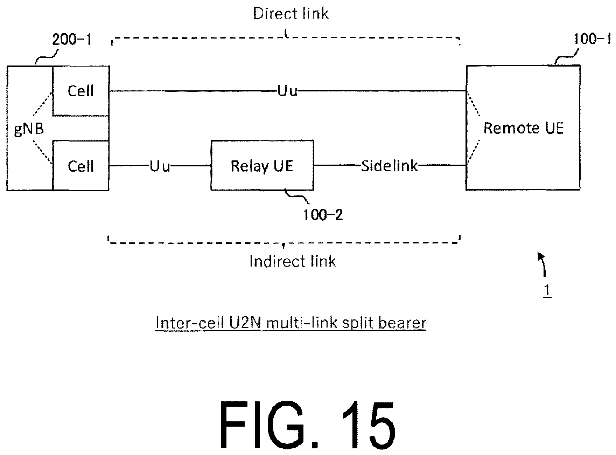

For example, FIG. 15 illustrates a configuration example of the mobile communication system 1 when the "multi-link split bearer" is applied to an inter-cell sidelink relay. Such a "multi-link split bearer" is referred to as an "inter-cell U2N multi-link split bearer".

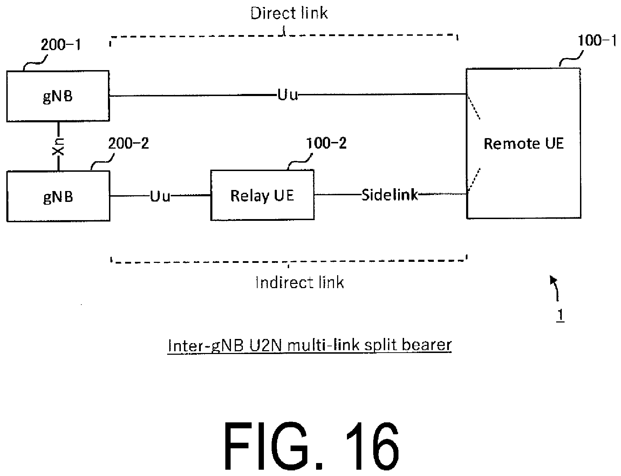

Further, for example, FIG. 16 illustrates a configuration example of the mobile communication system 1 when the "multi-link split bearer" is applied to an inter-gNB sidelink relay. Such a "multi-link split bearer" is referred to as an "inter-gNB U2N multi-link split bearer".

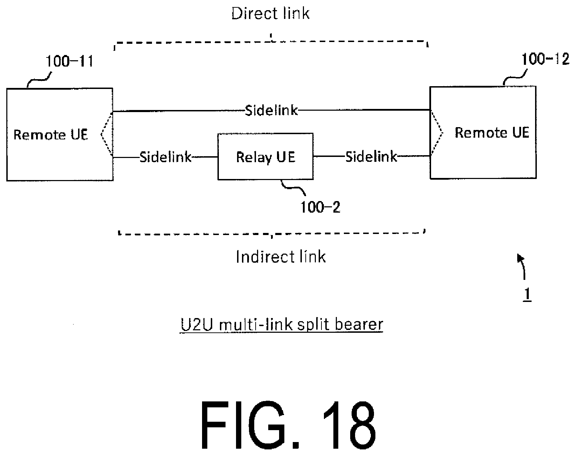

Further, for example, FIG. 18 illustrates a configuration example of the mobile communication system 1 when the "multi-link split bearer" is applied to a UE to UE (U2U) sidelink relay. Such a "multi-link split bearer" is referred to as a "U2U multi-link split bearer".

The "intra-cell U2N multi-link split bearer" is described in the first embodiment. The "inter-cell U2N multi-link split bearer" is described in a third embodiment. Further, the "inter-gNB U2N multi-link split bearer" is described in a fourth embodiment. Further, the "U2U multi-link split bearer" is described in a fifth embodiment.

Note that, in each mobile communication system 1, a first communication on a direct link between a remote user equipment (e.g., remote UE 100-1) and a base station (e.g., gNB 200-1), and a second communication on an indirect link between the remote user equipment and the base station via a relay user equipment (e.g., relay UE 100-2) are enabled.

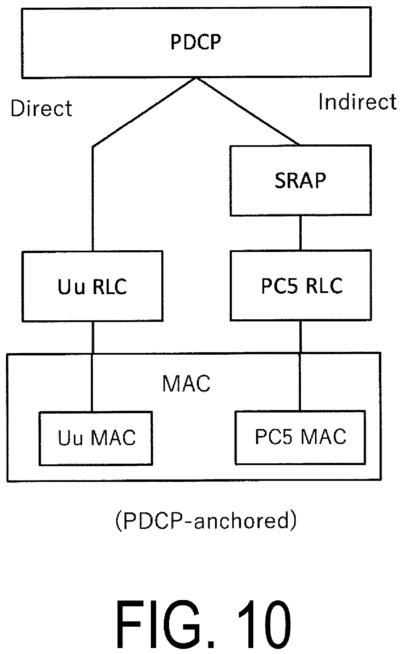

FIG. 10 is a diagram illustrating a configuration example of a protocol stack of the multi-link split bearer. FIG. 10 is also a diagram illustrating a configuration example of a protocol stack for the gNB 200-1 and the remote UE 100-1.

As illustrated in FIG. 10, the PDCP entity is associated with the RLC entity (UuRLC entity) in the direct link and the SRAP entity in the indirect link. This makes it possible to configure a split bearer with the PDCP being an anchor point in a way the same as and/or similar to the split bearer by the DC. In other words, the multi-link split bearer can be configured by associating the PDCP entity with the RLC entity in the direct link and the SRAP entity in the indirect link.

To be specific, firstly, the base station (e.g., gNB 200-1) transmits, to the remote user equipment (e.g., remote UE 100-1), association information associating the PDCP entity with the RLC entity in the direct link and the SRAP entity in the indirect link. Secondly, the remote user equipment associates the PDCP entity with the RLC entity and the SRAP entity in accordance with the association information.

This allows, for example, the remote UE 100-1 to associate the PDCP entity with the RLC entity and the SRAP entity, which makes it possible to configure the "multi-link split bearer" in the direct link and the indirect link.

A configuration method of the split bearer includes a method of configuring, when the direct link is established prior to the indirect link, the indirect link and associating the SRAP entity in the indirect link with the PDCP entity. The configuration method includes a method of configuring, when the indirect link is established prior to the direct link, the direct link and associating the RLC entity in the direct link with the PDCP entity. First, the former is described, and then the latter is described.

Note that, as illustrated in FIG. 10, one MAC entity may be configured for two links. One MAC-entity may be configured for each of the two links (Uu-MAC and PC5-MAC).

Hereinafter, NR Uu (or Uu) may be used to mean a direct link, and PC5 may be used to mean an indirect link. For example, the Uu RLC illustrated in FIG. 10 indicates the RLC in the direct link, and the PC5 RLC illustrated in FIG. 10 indicates the RLC in the indirect link. Hereinafter, the entity and the layer may be used without distinction.

### Operation Example 1 according to First Embodiment

In the first embodiment, an operation example 1 is described.

The operation example 1 is an operation example for a configuring example of the "intra-cell U2N multi-link split bearer" when a direct link is established at a prior time.

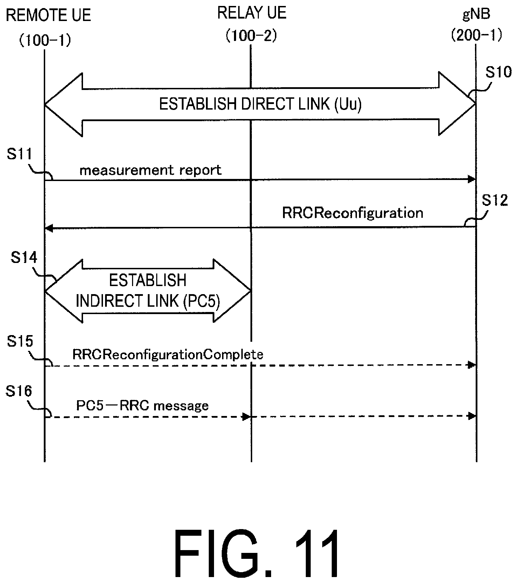

FIG. 11 is a diagram illustrating the operation example 1 according to the first embodiment.

As illustrated in FIG. 11, in step S10, a direct link is established between the remote UE 100-1 and the gNB 200-1 without involving the relay UE 100-2. Note that, at this time, no indirect link is established.

In step S11, the remote UE 100-1 transmits a measurement report (MeasurementReport) message to the gNB 200-1 through the direct link. The measurement report message includes the identification information of the relay UE 100-2 (having no indirect link established) and a measurement result for the relay UE 100-2.

In step S12, the gNB 200-1 transmits an RRC reconfiguration (RRCReconfiguration) message to the remote UE 100-1, in response to receiving the measurement report message. The RRC reconfiguration message includes the following information.

First, included are information of an RLC entity (RLC channel) in the direct link and information of an SRAP entity in the indirect link which are to be associated with a PDCP entity (Data Radio Bearer (DRB) or Signaling Radio Bearer (SRB)). Specifically, these pieces of information may be an identifier of the RLC entity to be associated with the PDCP entity and an identifier of the SRAP entity to be associated with the PDCP entity. Alternatively, these pieces of information may be association information associating these identifiers. For example, as illustrated in FIG. 10, the association information is sufficient to be information that can associate the PDCP entity with the RLC entity in the direct link and the SRAP in the indirect link.

Second, included is information indicating that the direct link is to be maintained even after the indirect link is established. The remote UE 100-1 may transmit the measurement report message, with a trigger that a radio quality for the relay UE 100-2 is better than a radio quality for the gNB 200-1 at the side of the direct link (step S11). However, in order to configure the "intra-cell U2N multi-link split bearer", the connection with the direct link needs to be maintained instead of being disconnected. For this reason, the gNB 200-1 includes, in the RRC reconfiguration message, the information indicating that the direct link is to be maintained even when receiving the measurement report message. Hereinafter, the information indicating that the direct link is to be maintained may be referred to as "direct link maintenance indication information". Note that, instead of the direct link maintenance indication information, the above-described association information may imply the indication that the direct link is to be maintained.

Third, included is information indicating establishment of a PC5 (indirect link) connection to the relay UE 100-2. Such information may be referred to as "indirect link establishment indication information". Instead of the indirect link establishment indication information also, the above-described association information may imply the indication of the PC5-RRC connection establishment. The indirect link establishment indication information may include identification information (UEID, L2 ID, or L2 Destination ID) of the relay UE 100-2. In this case, the identification information can be the indirect link establishment indication information indicating, to the remote UE 100-1, that a PC5-RRC connection (indirect link) is to be established with the relay UE 100-2. Further, the indirect link establishment indication information may include configuration information of entities of PC5-SRAP, PC5-RLC, PC5-MAC and PC5-PHY.

Fourth, included is information indicating whether the remote UE 100-1 transmits an RRC reconfiguration complete (RRCReconfigurationComplete) message to the relay UE 100-2 through the direct link or through the indirect link. Such information may be referred to as "transmission indication information". When the transmission indication information indicates transmission through the indirect link, the RRC reconfiguration complete message may be a first message to the relay UE 100-2 in the RRC idle state or the RRC inactive state. The first message is a message that causes the relay UE 100-2 in the RRC idle state or the RRC inactive state to start the RRC connection to gNB 200-1.

In step S14, the remote UE 100-1 establishes the PC5-RRC connection to the indicated relay UE 100-2. The remote UE 100-1 establishes the PC5-RRC connection, such as by transmitting an RRC reconfiguration sidelink (RRCReconfigurationSidelink) message to the relay UE 100-2. The remote UE 100-1 may perform relay reselection to reselect a relay UE 100-2 having the best radio quality and establish the PC5-RRC connection to the relay UE 100-2 instead of the indicated relay UE 100-2. The relay reselection is, for example, processing in which the remote UE 100-1, due to movement or the like, reselects the relay UE 100-2. In this case, the remote UE 100-1 may transmit, to the gNB 200-1, identification information (UEID, L2 Id, or L2 Destination ID) of the relay UE 100-2 with which the PC5-RRC connection is established by the relay reselection. The identification information may be included in a subsequent RRC reconfiguration complete message. Note that the remote UE 100-1 maintains the connection with the direct link even after establishing the PC5-RRC connection to the relay UE 100-2, in accordance with the direct link maintenance indication information. The remote UE 100-1, in establishing the PC5-RRC connection to the relay UE 100-2, may associate the PDCP entity with the SRAP entity and the RLC entity (Uu RLC entity) in accordance with the association information.

In step S15, the remote UE 100-1 transmits the RRC reconfiguration complete (RRCReconfigurationComplete) message to the gNB 200-1 through the direct link, in accordance with the transmission indication information. Alternatively, in step S16, the remote UE 100-1 transmits the RRC reconfiguration complete message to the relay UE 100-2 through the PC5 link, in accordance with the transmission indication information. The remote UE 100-1 may transmit a PC5-RRC message obtained by encapsulating the RRC reconfiguration complete message to the relay UE 100-2 for transmission of the RRC reconfiguration complete message through the PC5 link. Alternatively, the remote UE 100-1 may transmit the RRCReconfigurationComplete message on a designated sidelink bearer (SL-SRB or SL-DRB). In either case of step S15 or step S16, the RRC reconfiguration complete message (or PC5-RRC message) may include information on the cell ID of the connection destination.

As described above, the "intra-cell U2N multi-link split bearer" is configured.

### Operation Example 2 according to First Embodiment

In the first embodiment, an operation example 2 is described.

The operation example 2 is an operation example for a configuring example of the "intra-cell U2N multi-link split bearer" when a direct link is established at a prior time.

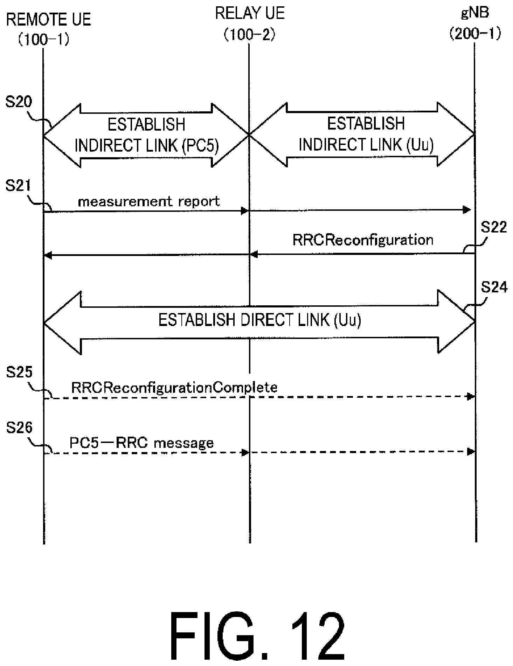

FIG. 12 is a diagram illustrating the operation example 2 according to the first embodiment.

As illustrated in FIG. 12, in step S20, an indirect link is established between the remote UE 100-1 and the gNB 200-1 via the relay UE 100-2. Note that, at this time, no direct link is established between the remote UE 100-1 and the gNB 200-1.

In step S21, the remote UE 100-1 transmits a measurement report message to the gNB 200-1 via the relay UE 100-2. The remote UE 100-1 transmits the measurement report message as an PC5-RRC message (MeasurementReportSidelink message), and the relay UE 100-2 transmits the measurement report message as an RRC message (MeasurementReport message) to the gNB 200-1.

In step S22, the gNB 200-1, in response to receiving the measurement report message, transmits an RRC reconfiguration message to the remote UE 100-1 through the indirect link. The RRC reconfiguration message includes the following information.

First, as in the operation example 1, included is information of an RLC entity (RLC channel) in the direct link and an SRAP entity in the indirect link which are to be associated with a PDCP entity (Data Radio Bearer (DRB) or Signaling Radio Bearer (SRB)). Specifically, these pieces of information may be an identifier of the RLC entity to be associated with the PDCP entity and an identifier of the SRAP entity to be associated with the PDCP entity. Alternatively, these pieces of information may be association information associating these identifiers. For example, as illustrated in FIG. 10, the association information is sufficient to be information that can associate the PDCP entity with the RLC entity in the direct link and the SRAP in the indirect link.

Second, included is information indicating that the indirect link is to be maintained even after the direct link is established. This is in order to maintain the indirect link and configure the "intra-cell U2N multi-link split bearer" as in the operation example 1. Hereinafter, the information indicating that the indirect link is to be maintained even after the direct link is established may be referred to as "indirect link maintenance indication information". Note that, instead of the indirect link maintenance indication information, the above-described association information may imply the indication that the indirect link is to be maintained.

Third, included is information indicating establishment of a direct link with the gNB 200-1. Such information may be referred to as "direct link establishment indication information". Instead of the direct link establishment indication information, the above-described association information may imply the indication of the direct link establishment. The direct link establishment indication information may include configuration information of entities of RLC, MAC, and PHY in the direct link.

Fourth, included is information ("transmission indication information") indicating whether the RRC reconfiguration complete (RRCReconfigurationComplete) message is transmitted through the direct link or the PC5-RRC message is transmitted through the indirect link. The transmission indication information may be information indicating that transmission is always through the direct link.

In step S24, the remote UE 100-1 establishes a direct link with the gNB 200-1. The remote UE 100-1 establishes the direct link using the control information and the like included in the RRC reconfiguration message received in step S22. The remote UE 100-1, in establishing the direct link, may associate the PDCP entity with the SRAP entity and the RLC entity (Uu RLC entity) in accordance with the association information.

In step S25, the remote UE 100-1 transmits the RRC reconfiguration complete message through the direct link, in accordance with the transmission indication information. Alternatively, in the step S26, the remote UE 100-1 transmits the PC5-RRC message through the indirect link, in accordance with the transmission indication information.

As described above, the "intra-cell U2N multi-link split bearer" is configured.

### Variation of First Embodiment

A variation of the first embodiment is described.

The first embodiment describes the example in which one PDCP (DRB or SRB) is associated with the RLC entity in the direct link and the SRAP entity in the indirect link. For example, one SRAP entity may be associated with the RLC entity in the direct link and the RLC entity in the indirect link.

To be specific, firstly, the base station (e.g., gNB 200-1) transmits, to the remote user equipment (e.g., remote UE 100-1), association information associating the PDCP entity with a first RLC entity (e.g., Uu RLC entity) in the direct link and a second RLC entity (e.g., PC5 RLC entity) in the indirect link. Secondly, the remote user equipment configures the SRAP entity that associates the PDCP entity with the first RLC entity and the second RLC entity, in accordance with the association information.

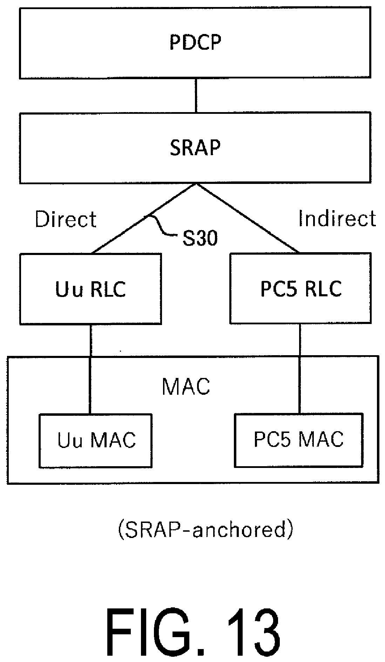

FIG. 13 is a diagram illustrating a configuration example of a protocol stack according to a variation of the first embodiment.

As illustrated in FIG. 13, the SRAP is associated with the RLC (Uu RLC) entity in the direct link, where one bearer (DRB or SRB) is associated with two RLC entities, for the SRAP.

Basically, the operation example 1 and the operation example 2 of the first embodiment can be applied to such a configuration. In other words, when the direct link is established at a prior time (operation example 1), the RRC reconfiguration message (step S12 in FIG. 11) is sufficient to include the following information.

First, included is information indicating that the association between the PDCP entity (DRB or SRB) and the RLC entity in the direct link is released. For example, since the direct link is established, the PDCP entity is associated with the RLC (Uu RLC) entity at the side of the direct link (e.g., in the direct link in FIG. 10). Before one SRAP entity is associated with the RLC entity in the direct link, the association between the associated PDCP entity and the RLC entity in the direct link is released. Information indicating that such association is to be released is included. Note that the information may be implicit information.

Second, included is information for establishment of the SRAP entity. To be specific, included is association information associating the PDCP entity (DRB or SRB) with the RLC (Uu RLC) entity in the direct link and the RLC (PC5 RLC) entity (RLC channel) in the indirect link. The association information may be association information associating the identifiers of the entities as in the operation example 1.

As described above, the remote UE 100-1 can configure the SRAP entity that associates the PDCP entity with two RLC entities, in accordance with the association information.

When the indirect link is established at a prior time (operation example 2), the RRC reconfiguration message (step S22 in FIG. 12) is sufficient to include the following information.

In other words, information for updating the SRAP entity is included in the RRC reconfiguration message. Specifically, included is association information associating the PDCP entity (DRB or SRB) with the RLC (Uu RLC) entity (RLC channel) in the direct link. The association information may be information associating identifiers of the entities. The association information may be information associating the PDCP entity with the RLC entity in the direct link and the RLC entity in the indirect link.

As described above, the remote UE 100-1 can configure the SRAP entity that associates the PDCP entity with two RLC entities, in accordance with the association information.

An operation of the thus configured SRAP entity is described.

A header of the SRAP Data PDU (SRAP header) includes identification information (UE ID (temporary ID or local ID)) of the remote UE 100-1 performing the U2N relay and a bearer ID (Uu radio bearer ID) of the remote UE 100-1.

Here, the following two points can be considered.

First, the SRAP entity has the bearer mapping function and the identification function of the remote UE 100-1 as described above. Therefore, the UEID and the bearer ID included in the SRAP header are used. However, these are functions performed by the SRAP entity configured at the side of the indirect link and are intrinsically not required at the side of the direct link. Therefore, the UEID and the bearer ID included in the SRAP header are less necessary at the side of the direct link. Alternatively, the UEID included in the SRAP header is not considered to be required at the side of the direct link.

Second, whether the SRAP header is required depends on whether the SRAP entity is associated with the RLC (Uu RLC) entity in the direct link on the counterpart side (reception side).

Therefore, the SRAP entity of the remote UE 100-1 performs either outputting an SRAP SDU to the first RLC entity (e.g., the RLC entity in the direct link) with no SRAP header being applied to the SRAP SDU, or outputting an SRAP PDU to the first RLC entity with the SRAP header including the bearer ID but not including the UEID being applied to the SRAP SDU.

To be specific, the SRAP entity of the remote UE 100-1 operates as follows (step S30).

Specifically, the SRAP entity processes the SRAP Data SDU as in a transparent mode (TM). In other words, the SRAP entity outputs the SRAP Data SDU to the RLC entity in the direct link with no SRAP header being applied to the SRAP Data SDU. Note that, in this case, the SRAP entity performs the selection (or mapping) of the RLC entity (or RCL channel) in the direct link. Alternatively, the SRAP entity may output the SRAP Data SDU to the RLC entity in the direct link after removing the SRAP header from the once created SRAP Data PDU. Alternatively, the SRAP entity may output the SRAP Data PDU to the RLC entity in the direct link with the SRAP header including the bearer ID but not including the UEID of the remote UE 100-1 being applied to the SRAP Data SDU. In this case, the SRAP entity may select and output a Data PDU format different from that of the PC5-RRC message.

The gNB 200-1 may perform configuration as follows for the remote UE 100-1 so that the SRAP entity of the remote UE 100-1 performs the above-described operation.

First, the gNB 200-1 may configure whether to apply the SRAP header for the remote UE 100-1. Specifically, whether to remove the SRAP header may be configured. Alternatively, designation of the TM may be configured. The designation of the TM may be designation of a processing mode. Alternatively, the configuration may be configured for each mapped RLC entity. In this case, the configuration may be configured for each LCID or for each RLC channel ID. For example, a Logical Channel ID (LCID) #3 may be configured to be in the TM, and an LCID #4 may be configured to be in the normal mode (SRAP header is applied). Alternatively, the processing mode may be configured to be designated for each entry in the mapping table.

Second, when the SRAP header is applied, whether the SRAP header includes the bearer ID and no identification information (UE ID) of the remote UE 100-1 may be configured. In this case, whether to use another Data PDU format may be configured. Alternatively, whether to apply a complete SRAP header including the bearer ID and the identification information of the remote UE 100-1 may be configured.

The gNB 200-1 may perform the above-described configuration by transmitting an RRC message (e.g., an RRC reconfiguration message) including such configuration information to the remote UE 100-1. The remote UE 100-1 performs the above-described processing (step S30) in accordance with the above-described configuration.

### Second Embodiment

A second embodiment is described. The second embodiment is an embodiment of an operation method in the "intra-cell U2N multi-link split bearer".

To be specific, firstly, the base station (e.g., gNB 200-1) transmits, to the remote user equipment (e.g., remote UE 100-1), activation indication information indicating activation or deactivation for the direct link and indicating activation or deactivation for the indirect link. Secondly, the remote user equipment activates or deactivates the direct link and activates or deactivates the indirect link, in accordance with the activation indication information.

This makes it possible to support various operations in the mobile communication system 1, such as transmitting different data or transmitting the same data using two links, for example.

Specifically, the following operations are assumed.
(1) Whether only one leg is used or both legs are used.
(2) Whether both legs are used to transmit and receive different data (as in carrier aggregation) or to transmit and receive the same data (as in PDCP duplication).
(3) Whether both legs are used to transmit data of both the Control Plane (CP) and the User Plane (UP) or one leg is used for the CP and the other leg is used for the UP separately (CP/UP separation).
(4) Whether both legs are used for transmission and reception (bidirectional relay) or one leg is used as a transmission leg and the other leg is used as a reception leg separately (unidirectional relay).

Note that a leg means a direct link or an indirect link.

A case of (1) described above can be implemented by activating one leg and deactivating the other leg. The remote UE 100-1 can transmit and receive data using the activated leg.

In a case of (1) described above, when one of the legs is permitted to be used, the remote UE 100-1 may transmit and receive data on the primary link, and when the amount of data buffered for transmission is larger than a threshold value, the remote UE 100-1 may transmit and receive data on both the secondary link and the primary link. Here, the primary link is a link through which data can always be transmitted and received, and the secondary link is a link through which data can be transmitted and received when a certain condition is satisfied.

In a case of (2) described above, whether the remote UE 100-1 transmits the same data or different data can be configured by an RRC message, a PDCP Control PDU, or the like transmitted from the gNB 200-1.

In a case of (3) described above, the data of the UP can be transmitted in one leg or both legs, and the control signal of the CP can also be transmitted in one leg or both legs.

In a case of (4) described above, the UL data and the DL data can be transmitted on the same link. The UL data can be transmitted on the indirect link and the DL data can be transmitted on the direct link. Further, the UL data can be transmitted on the direct link and the DL data can be transmitted on the indirect link.

A configuration method that enables such an operation is described below.

### Operation Example according to Second Embodiment

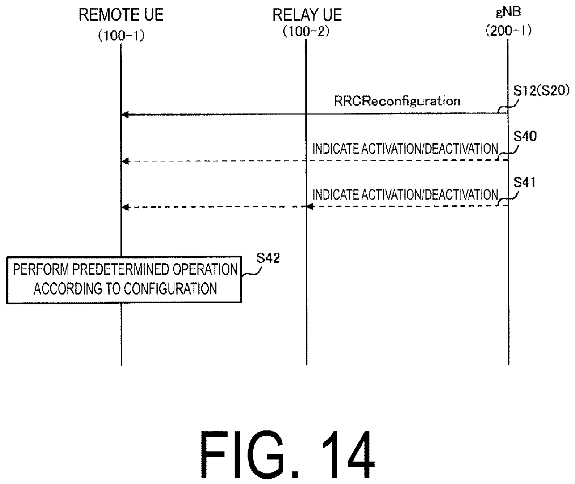

FIG. 14 is a diagram illustrating an operation example according to the second embodiment.

As illustrated in FIG. 14, the gNB 200-1 transmits an RRC reconfiguration (RRCReconfiguration) message to the remote UE 100-1 (step S12 or step S20). A transmission timing of the RRC reconfiguration message is the same as and/or similar to that in the first embodiment. Accordingly, the gNB 200-1 may transmit the RRC reconfiguration message through the direct link (step S12) or through the indirect link (step S20). The RRC reconfiguration message includes each piece of information described in the first embodiment.

In the second embodiment, the RRC reconfiguration message further includes usage restriction information of the direct link and the indirect link.

First, the usage restriction information may be information indicating that use of both legs is permitted (case of (1) described above). In this case, the usage restriction information may include information indicating that both legs are used to transmit and receive different data (transmit and receive first data in one leg, and transmit and receive second data in the other leg), or may include information indicating that both legs are used to transmit and receive the same data (case of (2) described above). In this case, the usage restriction information may include information indicating an initial state of activation or deactivation for each leg.

Second, the usage restriction information may be information indicating that use of one leg is permitted (case of (1) described above). In this case, the usage restriction information may include link indication information indicating a primary link continuously available and a secondary link available when a condition is satisfied (case of (1) described above). Further, the link indication information may include a threshold value for permission of use of the secondary link (i.e., for use of both legs). The threshold value may be a threshold value of the transmission data buffer amount. In this case, the condition for use of the secondary link is that the transmission data buffer amount exceeds the threshold value. The threshold value may be a threshold value of the radio quality. In this case, the condition for use of the secondary link is that the radio quality is better than the threshold value or that the radio quality is worse than the threshold value. Further, the usage restriction information may include information indicating a link for the CP and a link for the UP (case of (3) described above). Further, the usage restriction information may include information indicating a UL transmission link and a DL reception link (case of (4) described above).

The gNB 200-1 may transmit, to the remote UE 100-1, information indicating activation or deactivation for the direct link and indicating activation or deactivation for the indirect link (step S40 or step S41). Such information may be referred to as "activation indication information". The gNB 200-1 may transmit any one of a MAC CE, a PDCP Control PDU, or an RRC message including the activation indication information to the remote UE 100-1. The RRC message may be an RRC reconfiguration message. In this case, the RRC reconfiguration message may include the usage restriction information and the activation indication information.

The gNB 200-1 may transmit the activation indication information through the direct link when the direct link is established (step S40), or may transmit the activation indication information through the indirect link when the indirect link is established (step S41).

In step S42, the remote UE 100-1 performs predetermined operations described below in accordance with the usage restriction information (and the activation indication information).

First, the remote UE 100-1, when receiving the activation indication information, activates or deactivates the direct link, and activates or deactivates the indirect link in accordance with the activation indication information.

Second, the remote UE 100-1, when receiving the usage restriction information indicating that use of both legs is permitted, monitors the Physical Downlink Control Channel (PDCCH) (in the direct link) and/or the Physical Sidelink Control Channel (PSCCH) (in the indirect link) for the activated leg. When the remote UE 100-1 can use both legs but one leg is deactivated, the remote UE 100-1 may perform the above monitoring on the activated leg. The remote UE 100-1 may also transmit the same data or different data using the activated leg as well. In other words, the remote UE 100-1 transmits the same data to the direct link and the indirect link in accordance with the usage restriction information indicating that the direct link and the indirect link are used to transmit and receive the same data. The remote UE 100-1 transmits the first data to the direct link and the second data different from the first data to the indirect link in accordance with the usage restriction information indicating that the direct link and the indirect link are used to transmit and receive the different data.

Third, when the remote UE 100-1 receives the usage restriction information indicating that the use of one leg is permitted, the usage restriction information including the link indication information, for example, the following is performed. In other words, the remote UE 100-1 configures the primary link and the secondary link in accordance with the link indication information. The remote UE 100-1 may monitor the PDCCH (direct link) and/or the PSCCH (indirect link) for the activated leg in the DL direction, regardless of the primary link and the secondary link. The remote UE 100-1 may perform transmission and reception using the primary link in the UL direction. Then, the remote UE 100-1 determines a condition for use of the secondary link by using the threshold value included in the link indication information, and performs transmission using both the primary link and the secondary link when the condition is satisfied.

Fourth, when the remote UE 100-1 receives the usage restriction information indicating that the use of one leg is permitted, the usage restriction information including the information indicating the link for the CP and the link for the UP, for example, the following is performed. In other words, the remote UE 100-1 transmits and receives a control signal by using the link designated for the CP. The remote UE 100-1 transmits and receive data by using the link designated for the UP. Both legs may be used in the DL direction.

Fifth, when the remote UE 100-1 receives the usage restriction information indicating that the use of one leg is permitted, the usage restriction information including the information indicating the UL transmission link and the DL reception link, for example, the following is performed. In other words, the remote UE 100-1 performs a UL transmission by using the link designated for UL. The remote UE 100-1 performs a DL reception by using the link designated for DL.

Note that the above-described predetermined operations are merely examples, and the operations may be appropriately combined. For example, the remote UE 100-1 may use both legs to transmit the same data (PDCP Duplication) and use the indirect link for the control signal, in accordance with the usage restriction information.

### Third Embodiment

A third embodiment is described.

In the third embodiment, the "inter-cell U2N multi-link split bearer" is described.

FIG. 15 is a diagram illustrating a configuration example of the mobile communication system 1 configured with the "inter-cell U2N multi-link split bearer".

As illustrated in FIG. 15, a plurality of cells are managed in one gNB 200-1. A direct link is configured between one cell (first cell) of the gNB 200-1 and the remote UE 100-1, and an indirect link is configured between the other cell (second cell) of the gNB 200-1 and the remote UE 100-1. A split bearer is configured by the direct link and the indirect link.

From the viewpoint of the remote UE 100-1, the split bearer is configured for the same gNB 200-1 although the cells are different from each other. Therefore, the "inter-cell U2N multi-link split bearer" can be configured by the operation the same as and/or similar to that in the first embodiment. As for an operation method in the "inter-cell U2N multi-link split bearer", an operation is possible by the configuration the same as and/or similar to that in the second embodiment.

### Fourth Embodiment

A fourth embodiment is described.

In the fourth embodiment, the "inter-gNB U2N multi-link split bearer" is described.

FIG. 16 is a diagram illustrating a configuration example of the mobile communication system 1 configured with the "inter-gNB U2N multi-link split bearer".

As illustrated in FIG. 16, a direct link is configured between the gNB 200-1 (hereinafter, which may be referred to as the "first gNB 200-1") and remote UE 100-1. An indirect link is configured between a gNB 200-2 (hereinafter, which may be referred to as a "second gNB 200-2") and the remote UE 100-1. A split bearer is configured by the direct link and the indirect link. In this way, the two different gNB 200-1 and gNB 200-2 configure the split bearer by the direct link and the indirect link for the remote UE 100-1.

The operation example described in the first embodiment is basically applicable to configuration of the "inter-gNB U2N multi-link split bearer". Note that, unlike the first embodiment, the Xn interface needs to be extended in order to enable cooperative control between the gNBs 200. The first gNB 200-1 and the second gNB 200-2 need to share information of the relay UE 100-2 with each other. Thereafter, like the first embodiment, the first gNB 200-1 transmits an RRC reconfiguration message including the identification information of the relay UE 100-2 and the like to the remote UE 100-1, thereby enabling configuration of the "inter-gNB U2N multi-link split bearer".

To be specific, firstly, a first base station (e.g., first gNB 200-1) transmits a secondary node addition request message including a measurement report to a second base station (e.g., second gNB 200-2) in response to receiving the measurement report from a remote user equipment (e.g., remote UE 100-1) through a direct link. Secondly, the second base station (e.g., second gNB 200-2) transmits a secondary node addition request acknowledgement message including identification information of a subordinate relay user equipment to the first base station in response to receiving the secondary node addition request message. Thirdly, the first base station transmits the identification information to the remote user equipment in response to receiving the secondary node addition request acknowledgement message.

This allows, for example, the remote UE 100-1 having the direct link established with the first gNB 200-1 to establish an indirect link via the relay UE 100-2 subordinate to the second gNB 200-2, based on the identification information. Therefore, the "inter-gNB U2N multi-link split bearer" can be configured.

Note that, in the following description, it is assumed that a Master Node (MN) uses a direct link (Uu) and an SN (secondary node) uses an indirect link (PC5). Therefore, the first gNB 200-1 may be referred to as the MN 200-1 and the second gNB 200-2 may be referred to as the SN 200-2. The description is given also assuming that the relay UE exists subordinate to the SN 200-2.

Hereinafter, a configuration method of the "inter-gNB U2N multi-link split bearer" is described.

### Operation Example according to Fourth Embodiment

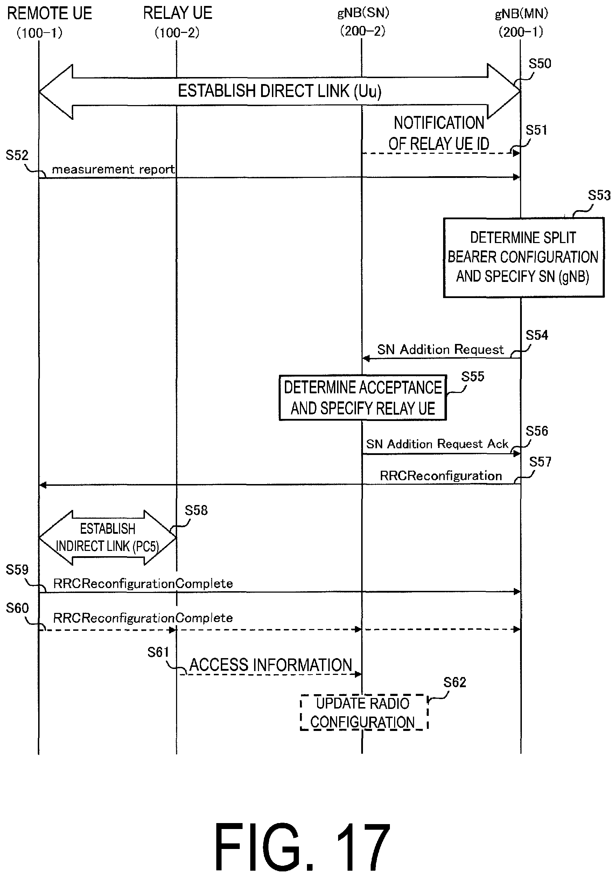

FIG. 17 is a diagram illustrating an operation example according to the fourth embodiment.

As illustrated in FIG. 17, in step S50, the MN 200-1 and the remote UE 100-1 establish the direct link. At this time, the remote UE 100-1 has no indirect link established.

In step S51, the SN 200-2 may transmit identification information (UEID) of the relay UE 100-2 subordinate to the SN 200-2 itself to a neighboring gNB (here, gNB 200-1). When the identification information of the relay UE 100-2 is included in the measurement report of the latter stage, the identification information need not be transmitted.

In step S52, the remote UE 100-1 transmits a measurement report (MeasurementReport) message. The measurement report message includes a measurement result for the relay UE 100-2. The measurement result may include cell information (cell ID) of a serving cell of the relay UE 100-2.

In step S53, the MN 200-1 determines to configure an "inter-gNB U2N multi-link split bearer" for the remote UE 100-1, based on the measurement results, and specifies an appropriate SN. For example, when a measurement result for a certain relay UE is equal to or more than a predetermined value (or less than a predetermined value), the MN 200-1 determines to perform the configuration and specifies the second gNB 200-2 having the relay UE subordinate to the second gNB 200-2, as the appropriate SN. The SN (second gNB 200-2) may be specified using the cell ID included in the measurement result.

In step S54, the MN 200-1 transmits an SN addition request message to the second gNB 200-2 specified as the appropriate SN. The SN addition request message may be, for example, a message for the MN 200-1 to request the second gNB 200-2 to select an appropriate relay UE. The SN addition request message is transmitted using the Xn interface. Instead of the SN addition request message, an SN modification request message may be used. The SN addition request includes a measurement result (measurement report) reported from the remote UE 100-1. The measurement result may include the identification information (UEID) of the relay UE 100-2 and the measurement result for the relay UE 100-2.

In step S55, the second gNB 200-2 determines to accept the SN addition request, based on the measurement result, and specifies an appropriate relay UE. For example, since the measurement result for the relay UE 100-2 is equal to or more than the predetermined value (or less than the predetermined value), the second gNB 200-2 determines to accept the SN addition request and specifies the relay UE 100-2 as the appropriate relay UE. With accepting the SN addition request, the second gNB 200-2 may become the SN 200-2, for example.

In step S56, the SN 200-2 transmits an SN addition request acknowledgement message to the MN 200-1. The SN addition request acknowledgement message includes the identification information (UEID, L2 ID, or L2 Destination ID) of the specified relay UE 100-2. The relay UE 100-2 may be a relay UE with which the remote UE 100-1 is to establish a PC5-RRC connection. The SN addition request acknowledgement message is also transmitted using the Xn interface. Instead of the SN addition request acknowledgement message, an SN modification request acknowledgement message may be used.

In step S57, the MN 200-1 transmits an RRC reconfiguration (RRCReconfiguration) message to the remote UE 100-1 through the direct link. The RRC reconfiguration message includes the identification information (UEID, L2 ID, or L2 Destination ID) of the relay UE 100-2. The identification information indicates, to the remote UE 100-1, the relay UE with which the MN 200-1 is to establish the PC5-RRC connection. Note that the RRC reconfiguration message includes the association information associating the PDCP entity with the SRAP entity and the RLC (Uu RLC) entity described in the first embodiment. The RRC reconfiguration message may include other pieces of information described in the first embodiment. The RRC reconfiguration message may include the usage restriction information described in the second embodiment.

In step S58, the remote UE 100-1 establishes a PC5-RRC connection to the relay UE 100-2 in accordance with the identification information (UEID, L2 ID, or L2 Destination ID) included in the RRC reconfiguration message. The remote UE 100-1 establishes the PC5-RRC connection by transmitting an RRC reconfiguration sidelink (RRCReconfigurationSidelink) message to the relay UE 100-2. The remote UE 100-1 may transmit, to the relay UE 100-2, the RRC reconfiguration sidelink message including information ("NW-indicated connection request") indicating a connection establishment request by a network indication as a cause.

In step S59, the remote UE 100-1 transmits an RRC reconfiguration complete (RRCReconfigurationComplete) message to the MN 200-1. The MN 200-1 transmits the received RRC reconfiguration complete message to the SN 200-2 using the Xn interface.

Alternatively, in step S60, the remote UE 100-1 may transmit the RRC reconfiguration complete message to the SN 200-2 via the relay UE 100-2 (or through the indirect link). The SN 200-2, in response to receiving the RRC reconfiguration complete message via the relay UE 100-2, transmits the RRC reconfiguration complete message to the MN 200-1. Alternatively, the SN 200-2 may transmit a message including information indicating that the RRC reconfiguration complete message is received to the MN 200-1. In the PC5 link, an PC5-RRC message obtained by encapsulating the RRC reconfiguration complete message may be used for transmission. Note that, when the relay UE 100-2 is in the RRC idle state or the RRC inactive state, the RRC reconfiguration complete message may be the first message described in the first embodiment. The relay UE 100-2 establishes an RRC connection to the SN 200-2 to be in an RRC connected state, and then is enabled to perform a sidelink relay in the indirect link.

Alternatively, the remote UE 100-1 may transmit the RRC reconfiguration complete message to the MN 200-1 before establishing the PC5-RRC connection (in step S58). In this case, after establishing the PC5-RRC connection to the relay UE 100-2, the remote UE 100-1 may transmit, to the MN 200-1, a message (such as an RRC reconfiguration complete message) including information indicating that the PC5-RRC connection is established.

In step S61, the relay UE 100-2 may transmit a message including access information indicating that the remote UE 100-1 has accessed the relay UE 100-2, to the SN 200-2. The message may include the identification information (UEID, L2 ID, or L2 Destination ID) of the remote 100-1. The access information may be information indicating that the PC5-RRC connection is established.

In step S62, the SN 200-2 may update the radio configuration of the relay UE 100-2. For example, the SN 200-2 may update the configuring of the SRAP.

As described above, the "intra-gNB U2N multi-link split bearer" is configured. In the mobile communication system 1 configured with the "inter-gNB U2N multi-link split bearer" in accordance with the usage restriction information or the like included in the RRC reconfiguration message (step S57), various operations can be supported as in the second embodiment.

### Fifth Embodiment

A fifth embodiment is described. In the fifth embodiment, a configuring example of the "U2U multi-link split bearer" is described.

FIG. 18 is a diagram illustrating a configuration example of the mobile communication system 1 according to the fifth embodiment. As illustrated in FIG. 18, a direct link (PC5) is configured between a first remote UE 100-11 and a second remote UE 100-12. An indirect link (PC5) is configured between the first remote UE 100-11 and the second remote UE 100-12 via the relay UE 100-2. The "U2U multi-link split bearer" is configured by the direct link and the indirect link.

When the gNB 200-1 configures the "U2U multi-link split bearer" for the first remote UE 100-11 and the second remote UE 100-12, and the relay UE 100-2, the above-described embodiments can be applied.

For example, the "U2U multi-link split bearer" can be configured by the gNB 200-1 transmitting configuration information such as the association information described in the first embodiment to at least any one selected from the group consisting of the first remote UE 100-11, the second remote UE 100-12, and the relay UE 100-2.

For example, various operations described in the second embodiment can be supported by the gNB 200-1 transmitting the usage restriction information to at least any one selected from the group consisting of the first remote UE 100-11, the second remote UE 100-12, and the relay UE 100-2.

### Other Embodiments

A program may be provided that causes a computer to execute each of the processes performed by the UE 100 (including relay UE 100-2, remote UE 100-1, first remote UE 100-11, and second remote UE 100-12 also) or the gNB 200. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM.

Circuits for executing processing performed by the UE 100 or the gNB 200 may be integrated, and at least a part of the UE 100 or the gNB 200 may be implemented as a semiconductor integrated circuit (chipset, System on a chip (SoC)).

The phrases "based on" and "depending on" used in the present disclosure do not mean "based only on" and "only depending on," unless specifically stated otherwise. The phrase "based on" means both "based only on" and "based at least in part on". Similarly, the phrase "depending on" means both "only depending on" and "at least partially depending on". The terms "include", "comprise" and variations thereof do not mean "include only items stated" but instead mean "may include only items stated" or "may include not only the items stated but also other items." The term "or" used in the present disclosure is not intended to be "exclusive or". Further, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the scope of the invention as defined by the appended claims. The embodiments, operation examples, and processing operations may be adequately combined without being inconsistent.

## Claims

1. A communication control method in a mobile communication system for being capable of performing a first communication on a direct link between a remote user equipment (100-1) and a base station (200) and a second communication on an indirect link between the remote user equipment (100-1) and the base station (200) via a relay user equipment (100-2), the communication control method comprising:
transmitting, by the remote user equipment (100-1), a measurement report message including identification information of the relay user equipment (100-2) to the base station (200) via the direct link;
receiving, by the remote user equipment (100-1), an RRC Reconfiguration message for configuring the indirect link to the relay user equipment (100-2), from the base station (200) via the direct link, the RRC Reconfiguration message including information of an RLC entity in the direct link and information of an SRAP entity in the indirect link which are to be associated with a PDCP entity of a DRB established between the remote user equipment (100-1) and the base station (200);
establishing, based on the received information, by the remote user equipment (100-1), the indirect link to the relay user equipment (100-2); and
transmitting, by the remote user equipment (100-1), an RRC Reconfiguration Complete message to the base station (200) via the direct link.

2. The communication control method according to claim 1, wherein
the RRC Reconfiguration message includes the information of the relay user equipment (100-2).

3. A chipset used in a remote user equipment (100-1) configured to be capable of performing a first communication on a direct link between the remote user equipment (100-1) and a base station (200) and a second communication on an indirect link between the remote user equipment (100-1) and the base station (200) via a relay user equipment (100-2), the chipset being configured to execute processing of:
transmitting a measurement report message including identification information of the relay user equipment (100-2) to the base station (200) via the direct link;
receiving an RRC Reconfiguration message for configuring the indirect link to the relay user equipment (100-2), from the base station (200) via the direct link, the RRC Reconfiguration message including information of an RLC entity in the direct link and information of an SRAP entity in the indirect link which are to be associated with a PDCP entity of a DRB established between the remote user equipment (100-1) and the base station (200);
establishing based on the received information the indirect link to the relay user equipment (100-2); and
transmitting an RRC Reconfiguration Complete message to the base station (200) via the direct link.

4. The chipset according to claim 3, wherein
the RRC Reconfiguration message includes the information of the relay user equipment (100-2).

5. A mobile communication system (1) comprising:
a base station (200);
a relay user equipment (100-2); and
a remote user equipment (100-1) configured to be capable of performing a first communication on a direct link between the remote user equipment (100-1) and the base station (200) and a second communication on an indirect link between the remote user equipment (100-1) and the base station (200) via the relay user equipment (100-2), wherein
the remote user equipment (100-1) is configured to transmit a measurement report message including identification information of the relay user equipment (100-2) to the base station (200) via the direct link;
the remote user equipment (100-1) is configured to receive an RRC Reconfiguration message for configuring the indirect link to the relay user equipment (100-2), from the base station (200) via the direct link, the RRC Reconfiguration message including information of an RLC entity in the direct link and information of an SRAP entity in the indirect link which are to be associated with a PDCP entity of a DRB established between the remote user equipment (100-1) and the base station (200);
the remote user equipment (100-1) is configured to establish based on the received information the indirect link to the relay user equipment (100-2); and
the remote user equipment (100-1) is configured to transmits an RRC Reconfiguration Complete message to the base station (200) via the direct link.

6. The mobile communication system (1) according to claim 5, wherein
the RRC Reconfiguration message includes the information of the relay user equipment (100-2).

7. A computer program causing a remote user equipment (100-1) to carry out the method claim 1.

8. The computer program according to claim 7, wherein
the RRC Reconfiguration message includes the information of the relay user equipment (100-2).

9. A remote user equipment (100-1) comprising the chipset according to claim 3.

## Patentansprüche

1. Kommunikationssteuerverfahren in einem Mobilkommunikationssystem, um in der Lage zu sein, eine erste Kommunikation auf einer direkten Verbindung zwischen einer entfernt angeordneten Benutzereinrichtung (100-1) und einer Basisstation (200) und eine zweite Kommunikation auf einer indirekten Verbindung zwischen der entfernt angeordneten Benutzereinrichtung (100-1) und der Basisstation (200) über eine Relais-Benutzereinrichtung (100-2) durchzuführen, wobei das Kommunikationssteuerverfahren aufweist:
Senden, durch die entfernt angeordnete Benutzereinrichtung (100-1), einer Messberichtsnachricht, die Identifikationsinformationen der Relais-Benutzereinrichtung (100-2) aufweist, über die direkte Verbindung an die Basisstation (200),
Empfangen, durch die entfernt angeordnete Benutzereinrichtung (100-1), einer RRC-Neukonfigurationsnachricht zum Konfigurieren der indirekten Verbindung mit der Relais-Benutzereinrichtung (100-2), von der Basisstation (200) über die direkte Verbindung, wobei die RRC-Neukonfigurationsnachricht Informationen einer RLC-Entität in der direkten Verbindung und Informationen einer SRAP-Entität in der indirekten Verbindung aufweist, die mit einer PDCP-Entität eines DRB zu assoziieren sind, der zwischen der entfernt angeordneten Benutzereinrichtung (100-1) und der Basisstation (200) eingerichtet wurde,
Einrichten, basierend auf den empfangenen Informationen, durch die entfernt angeordnete Benutzereinrichtung (100-1), der indirekten Verbindung mit der Relais-Benutzereinrichtung (100-2), und
Senden, durch die entfernt angeordnete Benutzereinrichtung (100-1), einer RRC-Neukonfigurations-Abschlussnachricht an die Basisstation (200) über die direkte Verbindung.

2. Kommunikationssteuerverfahren gemäß Anspruch 1, wobei
die RRC-Neukonfigurationsnachricht die Informationen der Relais-Benutzereinrichtung (100-2) aufweist.

3. Chipsatz, der in einer entfernt angeordneten Benutzereinrichtung (100-1) verwendet wird, die konfiguriert ist, um eine erste Kommunikation auf einer direkten Verbindung zwischen der entfernt angeordneten Benutzereinrichtung (100-1) und einer Basisstation (200) und eine zweite Kommunikation auf einer indirekten Verbindung zwischen der entfernt angeordneten Benutzereinrichtung (100-1) und der Basisstation (200) über eine Relais-Benutzereinrichtung (100-2) durchzuführen, wobei der Chipsatz konfiguriert ist, um folgende Verarbeitung auszuführen:
Senden einer Messberichtsnachricht, die Identifikationsinformationen der Relais-Benutzereinrichtung (100-2) aufweist, an die Basisstation (200) über die direkte Verbindung,
Empfangen einer RRC-Neukonfigurationsnachricht zum Konfigurieren der indirekten Verbindung mit der Relais-Benutzereinrichtung (100-2) von der Basisstation (200) über die direkte Verbindung, wobei die RRC-Neukonfigurationsnachricht Informationen einer RLC-Entität in der direkten Verbindung und Informationen einer SRAP-Entität in der indirekten Verbindung aufweist, die mit einer PDCP-Entität eines DRB zu assoziieren sind, der zwischen der entfernt angeordneten Benutzereinrichtung (100-1) und der Basisstation (200) eingerichtet wurde,
Einrichten, basierend auf den empfangenen Informationen, der indirekten Verbindung mit der Relais-Benutzereinrichtung (100-2), und
Senden einer RRC-Neukonfigurations-Abschlussnachricht an die Basisstation (200) über die direkte Verbindung.

4. Chipsatz gemäß Anspruch 3, wobei
die RRC-Neukonfigurationsnachricht die Informationen der Relais-Benutzereinrichtung (100-2) aufweist.

5. Mobilkommunikationssystem (1), aufweisend:
eine Basisstation (200),
eine Relais-Benutzereinrichtung (100-2) und
eine entfernt angeordnete Benutzereinrichtung (100-1), die konfiguriert ist, um eine erste Kommunikation auf einer direkten Verbindung zwischen der entfernt angeordneten Benutzereinrichtung (100-1) und der Basisstation (200) und eine zweite Kommunikation auf einer indirekten Verbindung zwischen der entfernt angeordneten Benutzereinrichtung (100-1) und der Basisstation (200) über die Relais-Benutzereinrichtung (100-2) durchzuführen, wobei
die entfernt angeordnete Benutzereinrichtung (100-1) konfiguriert ist, um eine Messberichtsnachricht, die Identifikationsinformationen der Relais-Benutzereinrichtung (100-2) aufweist, über die direkte Verbindung an die Basisstation (200) zu senden,
die entfernt angeordnete Benutzereinrichtung (100-1) konfiguriert ist, um eine RRC-Neukonfigurationsnachricht zum Konfigurieren der indirekten Verbindung mit der Relais-Benutzereinrichtung (100-2) von der Basisstation (200) über die direkte Verbindung zu empfangen, wobei die RRC-Neukonfigurationsnachricht Informationen einer RLC-Entität in der direkten Verbindung und Informationen einer SRAP-Entität in der indirekten Verbindung aufweist, die mit einer PDCP-Entität eines DRB zu assoziieren sind, der zwischen der entfernt angeordneten Benutzereinrichtung (100-1) und der Basisstation (200) eingerichtet wurde,
die entfernt angeordnete Benutzereinrichtung (100-1) konfiguriert ist, um basierend auf den empfangenen Informationen die indirekte Verbindung mit der Relais-Benutzereinrichtung (100-2) einzurichten, und
die entfernt angeordnete Benutzereinrichtung (100-1) konfiguriert ist, um eine RRC-Neukonfigurations-Abschlussnachricht über die direkte Verbindung an die Basisstation (200) zu senden.

6. Mobilkommunikationssystem (1) gemäß Anspruch 5, wobei
die RRC-Neukonfigurationsnachricht die Informationen der Relais-Benutzereinrichtung (100-2) aufweist.

7. Computerprogramm, das eine entfernt angeordnete Benutzereinrichtung (100-1) veranlasst, das Verfahren gemäß Anspruch 1 auszuführen.

8. Computerprogramm gemäß Anspruch 7, wobei
die RRC-Neukonfigurationsnachricht die Informationen der Relais-Benutzereinrichtung (100-2) aufweist.

9. Entfernt angeordnete Benutzereinrichtung (100-1), die den Chipsatz gemäß Anspruch 3 aufweist.

## Revendications

1. Procédé de commande de communication dans un système de communication mobile pour pouvoir effectuer une première communication sur une liaison directe entre un équipement utilisateur distant (100-1) et une station de base (200) et une deuxième communication sur une liaison indirecte entre l'équipement utilisateur distant (100-1) et la station de base (200) via un équipement utilisateur relais (100-2), le procédé de commande de communication comprenant :
la transmission, par l'équipement utilisateur distant (100-1), d'un message de rapport de mesure comprenant des informations d'identification de l'équipement utilisateur relais (100-2) à la station de base (200) via la liaison directe ;
la réception, par l'équipement utilisateur distant (100-1), d'un message de reconfiguration RRC pour configurer la liaison indirecte vers l'équipement utilisateur relais (100-2), provenant de la station de base (200) via la liaison directe, le message de reconfiguration RRC comprenant des informations d'une entité RLC dans la liaison directe et des informations d'une entité SRAP dans la liaison indirecte qui doivent être associées à une entité PDCP d'un DRB établi entre l'équipement utilisateur distant (100-1) et la station de base (200) ;
l'établissement, sur la base des informations reçues, par l'équipement utilisateur distant (100-1), de la liaison indirecte vers l'équipement utilisateur relais (100-2) ; et
la transmission, par l'équipement utilisateur distant (100-1), d'un message de reconfiguration RRC terminée à la station de base (200) via la liaison directe.

2. Procédé de commande de communication selon la revendication 1, dans lequel
le message de reconfiguration RRC comprend les informations de l'équipement utilisateur relais (100-2).

3. Chipset utilisé dans un équipement utilisateur distant (100-1) configuré pour être capable d'effectuer une première communication sur une liaison directe entre l'équipement utilisateur distant (100-1) et une station de base (200) et une deuxième communication sur une liaison indirecte entre l'équipement utilisateur distant (100-1) et la station de base (200) via un équipement utilisateur relais (100-2), le chipset étant configuré pour exécuter le traitement consistant à :
transmettre un message de rapport de mesure comprenant des informations d'identification de l'équipement utilisateur relais (100-2) à la station de base (200) via la liaison directe ;
recevoir un message de reconfiguration RRC pour configurer la liaison indirecte vers l'équipement utilisateur relais (100-2), depuis la station de base (200) via la liaison directe, le message de reconfiguration RRC comprenant des informations d'une entité RLC dans la liaison directe et des informations d'une entité SRAP dans la liaison indirecte qui doivent être associées à une entité PDCP d'un DRB établi entre l'équipement utilisateur distant (100-1) et la station de base (200) ;
établir, sur la base des informations reçues, la liaison indirecte vers l'équipement utilisateur relais (100-2) ; et
transmettre un message de reconfiguration RRC terminée à la station de base (200) via la liaison directe.

4. Chipset selon la revendication 3, dans lequel
le message de reconfiguration RRC comprend les informations de l'équipement utilisateur relais (100-2).

5. Système de communication mobile (1), comprenant :
une station de base (200) ;
un équipement utilisateur relais (100-2) ; et
un équipement utilisateur distant (100-1) configuré pour être capable d'effectuer une première communication sur une liaison directe entre l'équipement utilisateur distant (100-1) et la station de base (200) et une deuxième communication sur une liaison indirecte entre l'équipement utilisateur distant (100-1) et la station de base (200) via l'équipement utilisateur relais (100- 2), dans lequel
l'équipement utilisateur distant (100-1) est configuré pour transmettre un message de rapport de mesure comprenant des informations d'identification de l'équipement utilisateur relais (100- 2) à la station de base (200) via la liaison directe ;
l'équipement utilisateur distant (100-1) est configuré pour recevoir un message de reconfiguration RRC pour configurer la liaison indirecte vers l'équipement utilisateur relais (100-2), depuis la station de base (200) via la liaison directe, le message de reconfiguration RRC comprenant des informations d'une entité RLC dans la liaison directe et des informations d'une entité SRAP dans la liaison indirecte qui doivent être associées à une entité PDCP d'un DRB établi entre l'équipement utilisateur distant (100-1) et la station de base (200) ;
l'équipement utilisateur distant (100-1) est configuré pour établir, sur la base des informations reçues, la liaison indirecte vers l'équipement utilisateur relais (100-2) ; et
l'équipement utilisateur distant (100-1) est configuré pour transmettre un message de reconfiguration RRC terminée à la station de base (200) via la liaison directe.

6. Système de communication mobile (1) selon la revendication 5, dans lequel
le message de reconfiguration RRC comprend les informations de l'équipement utilisateur relais (100-2).

7. Programme informatique amenant un équipement utilisateur distant (100-1) à mettre en œuvre le procédé selon la revendication 1.

8. Programme informatique selon la revendication 7, dans lequel
le message de reconfiguration RRC comprend les informations de l'équipement utilisateur relais (100-2).

9. Équipement utilisateur distant (100-1) comprenant le chipset selon la revendication 3.
